(19) Europäisches Patentamt
European Patent Office
Office européen des brevets

(11) **EP 2 931 602 B1**

(12) # EUROPEAN PATENT SPECIFICATION

(45) Date of publication and mention
of the grant of the patent:
**11.09.2019 Bulletin 2019/37**

(51) Int Cl.:
**B64C 27/00** (2006.01)     **F16F 15/22** (2006.01)

(21) Application number: **13811656.1**

(86) International application number:
**PCT/US2013/071452**

(22) Date of filing: **22.11.2013**

(87) International publication number:
**WO 2014/092975 (19.06.2014 Gazette 2014/25)**

(54) **IMPROVED CIRCULAR FORCE GENERATOR DEVICES, SYSTEMS, AND METHODS FOR USE IN AN ACTIVE VIBRATION CONTROL SYSTEM**

VERBESSERTE KREISFÖRMIGE KRAFTERZEUGERVORRICHTUNGEN, SYSTEME UND VERFAHREN ZUR VERWENDUNG IN EINEM AKTIVEN SCHWINGUNGSDÄMPFUNGSSYSTEM

DISPOSITIFS, SYSTÈMES ET PROCÉDÉS DE GÉNÉRATEUR DE FORCE CIRCULAIRE PERFECTIONNÉS, DESTINÉS À ÊTRE UTILISÉS DANS UN SYSTÈME DE COMMANDE ACTIVE DE VIBRATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2012 US 201261736148 P**

(43) Date of publication of application:
**21.10.2015 Bulletin 2015/43**

(73) Proprietor: **LORD Corporation
Cary, NC 27511 (US)**

(72) Inventors:
• **BLACK, Paul, R.**
  **Fuquay-Varina, NC 27526 (US)**
• **SWANSON, Doug, A.**
  **Cary, NC 27519 (US)**
• **BADRE-ALAM, Askari**
  **Cary, NC 27518 (US)**
• **JANOWSKI, Michael, D.**
  **Clayton, NC 27527 (US)**
• **ALTIERI, Russell, E.**
  **Holly Springs, NC 27540 (US)**
• **MEYERS, Andrew, D.**
  **Apex, NC 27502 (US)**
• **RYU, Jihan**
  **Apex, NC 27502 (US)**

(74) Representative: **Murgitroyd & Company
Scotland House
165-169 Scotland Street
Glasgow G5 8PL (GB)**

(56) References cited:
**EP-A1- 0 409 462     WO-A1-2014/085236
WO-A2-2009/126608**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## TECHNICAL FIELD

The subject matter disclosed herein relates to devices, systems, and methods for controlling problematic vehicle vibrations. More particularly, the subject matter disclosed herein relates to methods and systems for controlling helicopter and/or fixed wing vehicle vibrations and/or noise, particularly methods and systems for canceling problematic rotating helicopter vibrations.

## BACKGROUND

Helicopter vibrations are particularly troublesome in that they can cause fatigue and wear on the equipment and occupants in the aircraft. In vehicles such as helicopters, vibrations are particularly problematic in that they can damage the actual structure and components that make up the vehicle in addition to the contents of the vehicle.

U.S. Patent No. 5,005,439A1 discloses an inertia force generating device comprises two pairs of coaxial counterrotating eccentric rotors, whose rotational speeds and relative positions are automatically and continuously controlled so as to cancel undesirable vibrations produced by another device.

International Patent Publication No. WO 2009/126608 A2 discloses a vehicle a nonrotating vehicle body, a rotating machine member, and including a vehicle vibration control system, the vehicle vibration control system including a vehicle vibration control system controller, a vehicle rotating machine member sensor for inputting vehicle rotating machine member data correlating to the relative rotation of the vehicle rotating machine member rotating relative to the nonrotating vehicle body into the vehicle vibration control system controller, at least a first nonrotating vehicle body vibration sensor, the at least first nonrotating vehicle body vibration sensor inputting at least first nonrotating vehicle body vibration sensor data correlating to vehicle vibrations into the vehicle vibration control system controller, at least a first nonrotating vehicle body circular force generator, the at least a first nonrotating vehicle body circular force generator fixedly coupled with the nonrotating vehicle body, the at least first nonrotating vehicle body circular force generator controlled to produce a rotating force with a controllable rotating force magnitude and a controllable rotating force phase, the controllable rotating force magnitude controlled from a minimal force magnitude up to a maximum force magnitude, and with the controllable rotating force phase controlled in reference to the vehicle rotating machine member sensor data correlating to the relative rotation of the vehicle rotating machine member rotating relative to the nonrotating vehicle body wherein the vehicle vibration sensed by the at least first nonrotating vehicle body vibration sensor is reduced.

There is a need for a system and method of accurately and economically canceling rotating vehicle vibrations, accurately controlling rotary wing vibrations in a weight efficient manner, controlling vibrations in a helicopter hub so that the vibrations are efficiently minimized, and/or controlling problematic helicopter vibrations.

## SUMMARY

According to an aspect of the present invention, there is provided a circular force generator for use in an active vibration control system, comprising:

a component housing;
a center shaft positioned in a fixed relationship with respect to the component housing;
at least one motor having a rotor and a fixed stator, the rotor rotatably coupled to the center shaft by a bearing, wherein the fixed stator is configured to cause rotation about the center shaft of an eccentric mass connected to the rotor to produce a rotating force with a rotating force magnitude and a controllable rotating force phase;
a high accuracy servo controller configured to control the rotating force magnitude and a rotating force phase of the rotor, the control system comprising a Hall-effect sensor servo control; and
a micro-controller contained in the component housing, the micro-controller being configured to receive high-level digital commands from a central controller.

## BRIEF DESCRIPTION OF THE DRAWINGS

Figure 1A is a graph illustrating a relationship between the bore diameter of a bearing of a circular force generator and the power required for operation of the circular force generator.

Figure 1B is a graph illustrating a relationship between the frequency of operation of a circular force generator and the power required for operation.

Figure 2 is a sectional side view illustrating a circular force generator according to an embodiment of the presently disclosed subject matter.

Figure 3 is an exploded perspective view illustrating a circular force generator according to an embodiment of the presently disclosed subject matter.

Figure 4 is a partially-exploded perspective view illustrating a motor of a circular force generator according to an embodiment of the presently disclosed subject matter.

Figure 5A is a graph illustrating the position control error of a conventional circular force generator that uses an encoder.

Figure 5B is a graph illustrating the position control error of a circular force generator using a Hall-effect servo control system according to an embodiment of the presently disclosed subject matter.

Figures 6A-6D are perspective views illustrating various form factors for circular force generators according to embodiments of the presently disclosed subject matter.

Figure 7 is a sectional side view illustrating a circular force generator having integrated control electronics according to an embodiment of the presently disclosed subject matter.

Figure 8 is a schematic view illustrating an active vibration control system according to an embodiment of the presently disclosed subject matter.

Figure 9 is a schematic model illustrating two masses rotating about a common axis.

Figure 10 is a graph illustrating the bi-axial force output of 2 circular force generators (e.g., 4 rotating masses).

Figures 11A and 11B are force diagrams for circular force generators having two rotating masses according to embodiments of the presently disclosed subject matter.

Figure 12 is a graph illustrating a relationship between force output and moment output for a circular force generator having plural rotating masses according to an embodiment of the presently disclosed subject matter.

Figure 13A is a graph illustrating a relationship between maximum N/rev force and maximum 2nd harmonic force for a circular force generator according to an embodiment of the presently disclosed subject matter.

Figure 13B is a graph illustrating a relationship between maximum N/rev force and maximum residual moment for a circular force generator according to an embodiment of the presently disclosed subject matter.

Figures 14A to 14C are illustrations of a weight-optimized mass for a circular force generator according to an embodiment of the presently disclosed subject matter.

Figures 15A to 15C are illustrations of a moment-optimized mass for a circular force generator according to an embodiment of the presently disclosed subject matter.

Figure 16 shows a block diagram of a motor control gravity compensation that uses the vertical acceleration at the base of the circular force generator to reduce the force distortion at the second harmonic according to an embodiment of the presently disclosed subject matter.

## DETAILED DESCRIPTION

The present subject matter provides improvement in circular force generators (CFGs) for use in an active vibration control system, such as is used to control vibration in a helicopter. The disclosed devices, systems, and methods can entail modifications to both software and hardware to control the CFG and/or to minimize force distortion created by the CFG. These devices, systems, and methods can be implemented in the CFG and can be particularly useful under low force operating conditions where the residual vibration created by the CFG can be larger than the vibration created by the main rotor of the helicopter, which can be undesirable to the customer. Low force is typically less than 30% of the maximum force output of the CFG and on a helicopter active vibration control system can occur during conditions such as hover or at mid-speed flight ranges (e.g. 80-100 kias).

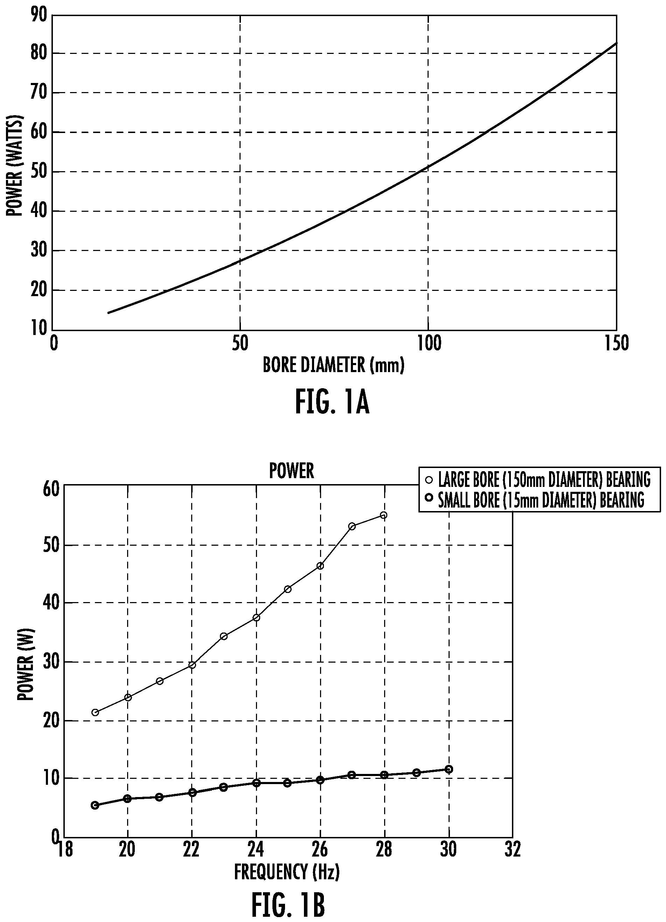

In a first aspect, the disclosed devices, systems, and methods can involve the use of a CFG having a bearing (e.g., a ball bearing or other rolling-element bearing) with a diameter that can be comparatively smaller than that of a conventional CFG. Large diameter bearings were used in the past partially due to the sensing technology (centerline encoder), which did not allow for a center shaft with small diameter bearing. Specifically, for example, whereas conventional CFGs can have a bearing diameter of about 150 mm, a CFG according to the present subject matter can be configured to have a bearing diameter of about 15 mm. The reduced bearing diameter can result in a reduced ball speed during operation at a given rotational speed compared to conventional systems, thereby lowering power requirements. (See, e.g., Figure 1A) Furthermore, as shown in Figure 1B, even when the frequency of operation is increased, the power required for such operation can be maintained at a comparatively lower level.

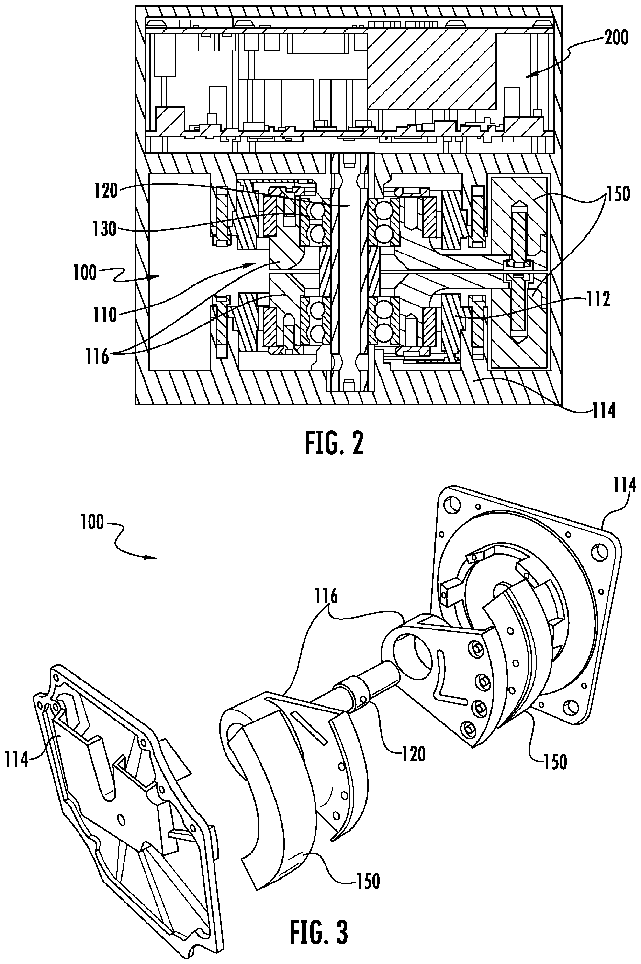

In a particular configuration shown in Figures 2 and 3, for example, a CFG, generally designated **100,** includes a pair of motors **110** each having a stator **112** mounted to endplates **114.** A rotor **116** of each motor **110** is coupled for rotation about a stationary center shaft **120** by a bearing **130** mounted inside the motor **110.** A rotating mass **150** is eccentrically connected to each rotor **116** such that rotation of the rotor **116** about the shaft **120** can generate a "circular" force.

Each of these elements of such a configuration allows for a comparatively lower profile design. In particular, the size of the bearing **130** provides a number of advantages over conventional CFG configurations. In some aspects, such novel bearings can be press fit on or about portions of a shaft and/or rotor frames to reduce any differential in thermal expansion. Moreover, the shaft, rotor, bearings, and/or portions thereof can be fabricated out of materials having a same or similar coefficient of thermal expansion (CTE). This can be advantageous for both improving wear and reducing fatigue. Such components can each be fabricated from a similar steel material or alloy, a similar aluminum (Al) material or alloy, or any other similar materials or metals having similar CTEs. Bearings, which can be press fit on steel shaft or rotors, improves wear fatigue and allows for smaller internal clearances. The improved bearings can be disposed on or about a centerline shaft. This results in a lowered drag torque, which results in reduced power requirements and a reduced motor size. For example, the CFG **100** having such a configuration operates at a much lower power level as discussed above. In addition, the bearing **130** generates less heat as a result, allowing the CFG **100** to operate in an extended temperature range (e.g., between about -54 to 70 ºC). The press fit of bearing onto shaft also produces less noise than current bearings. The increased ratio of the size of the balls within the bearing **130** with respect to the cross sectional dimension further enables a longer operating life for the CFG **100** compared to traditional designs.

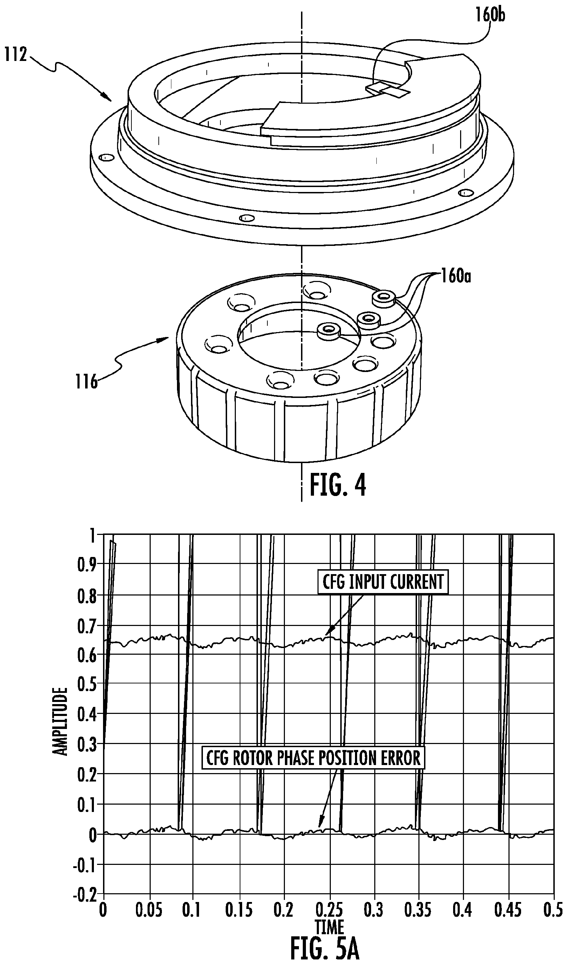

In another aspect, the improved CFG devices, systems, and methods include a high accuracy servo controller **200** that uses a plurality of rotating mass sensors to monitor the rotational position of the rotating mass **150** on the rotor **116** being driven by the motor **110** such that the controller **200** knows the rotational phase position of the rotating mass **150**. For example, the rotating mass sensors can comprise Hall-effect sensors configured for sensing the rotation of a magnetic rotating mass sensor target to provide out through a circuit board **202** to the system controller the rotational position of the rotating mass **150**. In one particular configuration shown in Figure 4, and in addition to one or more standard commutation Hall sensors (e.g., embedded within stator **112)**, an additional 1/rev Hall sensor **160b** (e.g., mounted on a printed circuit board on top of stator **112**) can be used for servo control of the CFG **100**. Specifically, 1/rev Hall sensor **160b** can be configured to precisely monitor the position of rotor **116** based on the position of one or more target magnets **160a**. The configuration shown in Figure 4 is but one exemplary arrangement, and the particular number and positioning of the rotating mass sensors can be modified based on a variety of design considerations of the system.

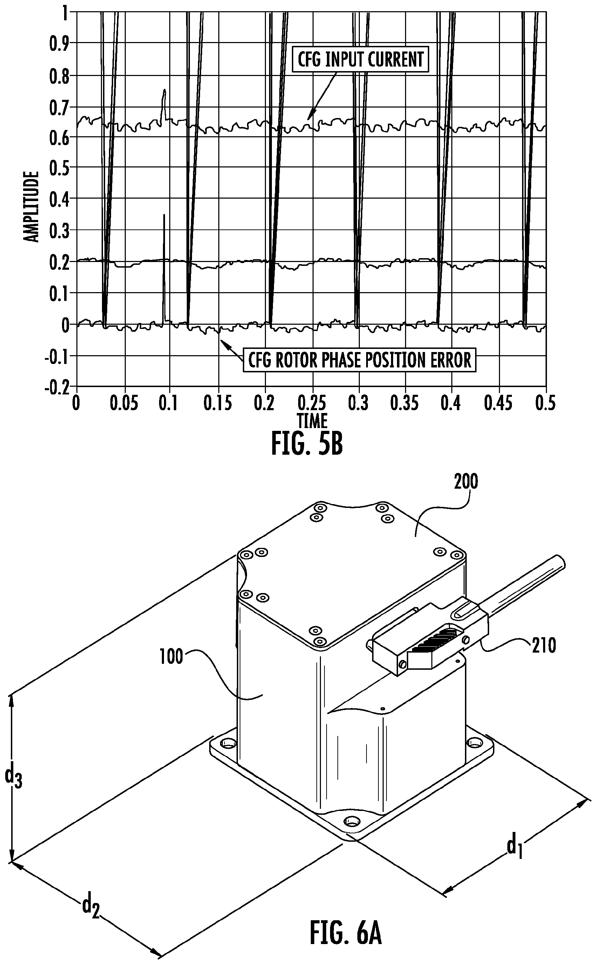

The accuracy of such a control configuration can be comparable to an encoder or resolver servo controller. As shown in Figures 5A and 5B, the position control error realized when using an encoder (See Fig. 5A) is only marginally better than the hall-effect sensor position control error (See Fig. 5B). By eliminating the need for an encoder or resolver, however, even if there is a small increase in position control error, that small detriment is offset by the great simplification in the design (e.g., reduce size/cost) and electronics. Furthermore, as discussed above with reference to Figure 4, such a configuration only requires one additional hall sensor (i.e., 1/rev Hall sensor **160b**), which can be built into the existing motor circuitry.

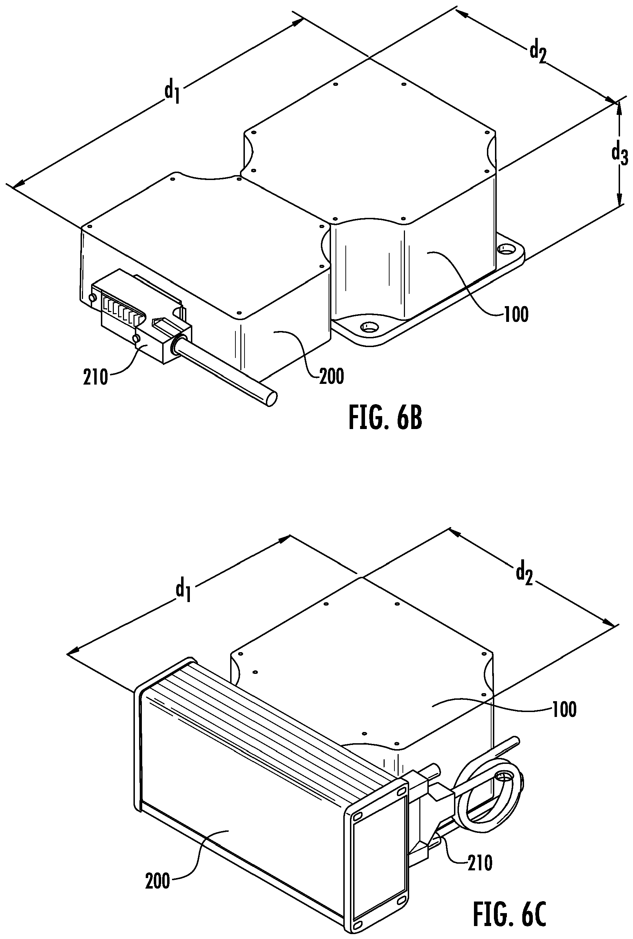

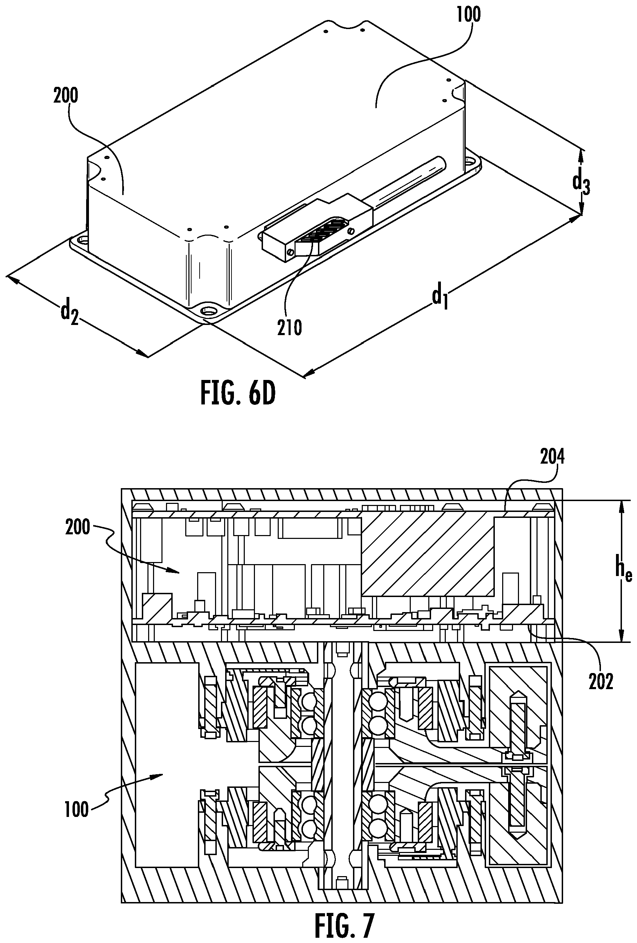

A further feature of the disclosed devices, systems, and methods is that, rather than being oil-lubricated, the bearing **130** can be a substantially sealed greased bearing. This feature simplifies lubrication requirements and allows the CFG **100** to be mounted in any orientation, thereby improving flexibility of the system and its ability to match the complex vibration field in the helicopter in an optimal manner. In this regard, as shown in Figures 6A-6D, a modular CFG according to the presently-disclosed subject matter is easily implemented in any of a variety of different form factors. For instance, Figure 6A shows the CFG **100** and the controller **200** being arranged in a stacked configuration with a connector **210** (e.g., a D-sub connector or a D38999 connector) being connected to the controller **200** for communication with the system controller. In this configuration, both a length **d1** (e.g., about 5.4 inches) and a width **d2** (e.g., about 5.4 inches) of the CFG **100** are minimized. This small footprint comes at the expense of a relatively increased height **d3** (e.g., about 4.7 inches) of the CFG **100,** but even in this arrangement, the integrated package is still relatively compact when compared to conventional systems.

Alternatively, Figures 6B-6C each show various side-by-side configurations in which the CFG **100** and the controller **200** can be arranged. Each of these exemplary configurations results in a relatively lower-profile design having a reduced height **d3** (e.g., between about 2.5 to 3 inches) compared to the stacked configuration shown in Figure 6A, although this reduction in height is offset by an increased length d1 (e.g., between about 7.1 and 10.5 inches). Those having skill in the art will recognize that the different form factors shown in Figures 6A-6D can be considered advantageous depending on the specific constraints of a particular mounting location (e.g., size, orientation, access). Furthermore, those having skill in the art will recognize that these exemplary configurations only illustrate four possible implementations, and other configurations can be used depending on these or other particular design considerations. By way of example, controller **200** may be remotely attached to CFG **100** by a cable or conduit. Additionally, controller **200** and CFG **100** may have a modular configuration where controller **200** may be detachable from CFG **100** via a plug, such as aviation quick-connect plugs. The use and positioning of the plug on the CFG is compatible with all configuration discussed herein.

Taken together, all of the improvements in the presently-disclosed CFG **100** results in a simpler mechanical assembly. For example, whereas previous CFG designs can constitute 18 machined parts, the improved CFG **100** disclosed herein (See, e.g., Figure 3) uses significantly fewer machined parts (e.g., as few as 7 parts or fewer). As a result, the compact design allows motor mounting features to be incorporated into the CFG **100,** thereby eliminating the need for separate motor retainers and/or bearing retainers. Further in this regard, the presently disclosed subject CFG **100** has a significantly lower manufacturing cost than previous designs.

Referring to Figure 7, the design can be made further compact and modular by integrating the drive electronics into the CFG **100,** which can be enabled, at least partially, as a result of the reduced heat generation of the relatively low-power CFG. For example, the controller **200** can be a highly-integrated micro-controller that includes a signal board **202** and a power board **204** that occupy an electronics volume that protrudes only a small distance $h_e$ (e.g., about 1.765 inches or less) from the CFG **100.** Such a configuration allows the controller **200** to operate as a completely stand-alone module, with the module configured to receive high-level digital commands from a small central controller. This modularity of co-located drive electronics enables any number of CFGs to be efficiently implemented.

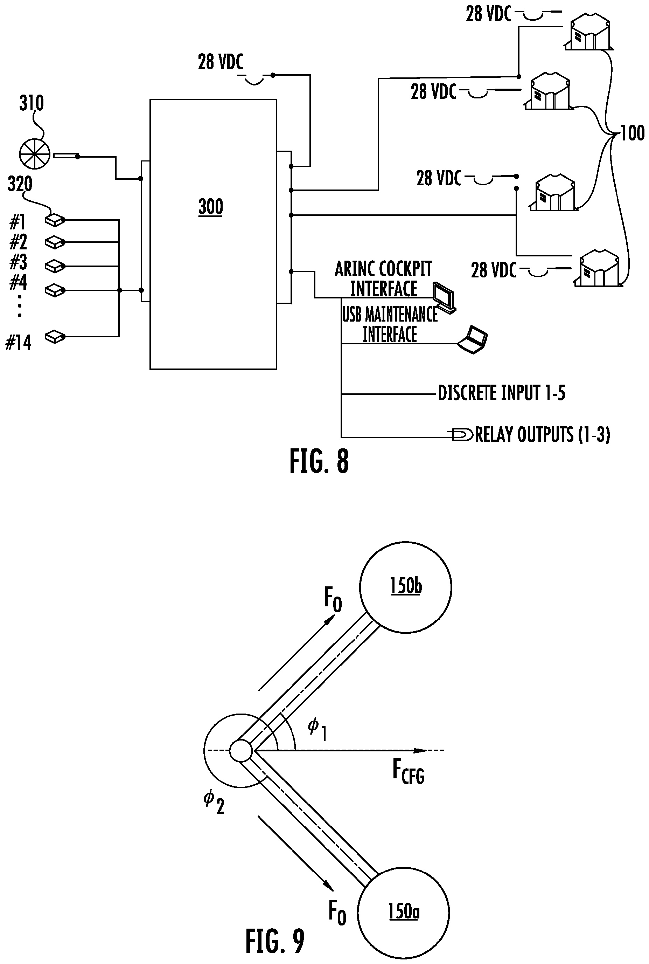

Regardless of the specific configuration of the CFG **100,** one or more of CFG **100** can be operated together as part of an active vibration control system. Figure 8 illustrates an exemplary configuration for such an active vibration control system having a plurality of CFGs **100** connected to a small central controller **300.** In addition, one or more input devices can further be connected to the central controller **300** to help determine the vibration being experienced. For example, a tachometer **310** that measures the rotor speed of the aircraft in which it is used and one or more accelerometers **320** provide inputs to the central controller **300.** Based on these inputs, each CFG can be controlled to reduce the effect of the measured vibrations on the system.

The present systems can be configured such that operating power for each CFG **100** can be provided by an unregulated aircraft power source (e.g., about 28 VDC). This low power design enables both the central controller **300** and the CFG drive electronics (i.e., controller **200**) to run off of an unregulated 28 VDC aircraft supply, which provides a wide range of advantages, such as simplifying design, saving cost, and saving the weight and space that would be required for a separate generator on a smaller aircraft. This low-power capability is helpful in active vibration control systems for smaller aircraft which only have 28 VDC aircraft power available and not the high-voltage systems (e.g., 115 VAC or 270 VAC) that are conventionally required to power the operation of force actuators.

As a result of the more compact size and modular nature of the improved CFG devices, systems, and methods disclosed herein, multiples of the CFG **100** can be arranged in pairs/arrays and specifically controlled to minimize or otherwise control force distortion created by the CFGs. For example, each CFG can be selectively operated to produce a circular force of varying magnitude and phase. The force of each rotor **116** can be determined by a size (m) of the rotating mass **150,** a distance (r) to a center of the rotating mass **150,** and its angular speed (ω):

$$F_0 = mr\omega^2,$$

With the configuration shown in Figure 9, the total CFG force of two masses (e.g., a first rotating mass **150a** and a second rotating mass **150b**) rotating about a common axis are determined by the force of each rotor and their relative phase angles:

$$F_{CFG} = 2F_0 \cos\left(\frac{\varphi_1 - \varphi_2}{2}\right)$$

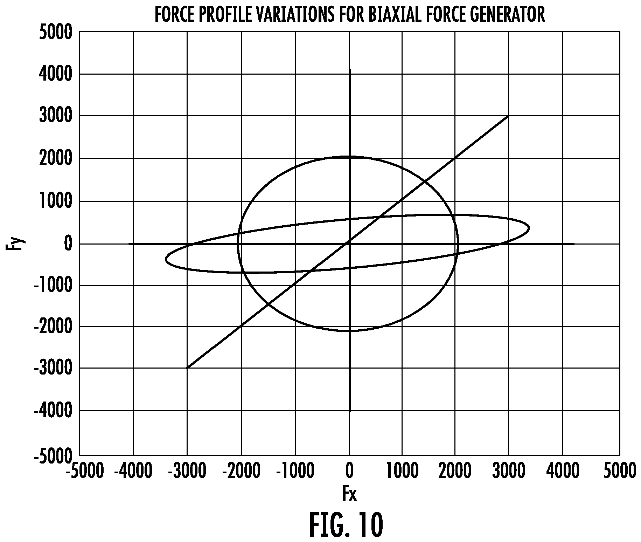

Based on such known relationships, the two imbalanced masses **150a** and **150b** can be configured to co-rotate such that the combination of the two generates circular forces acting radially outward. In this way, whereas one CFG produces a circular force, two counter-rotating CFGs mounted side-by-side or back-to-back are configured to produce a bi-linear force. (See, e.g., Figure 10). The controlled combination of circular forces from multiple CFGs is used to achieve higher degrees of vibration control.

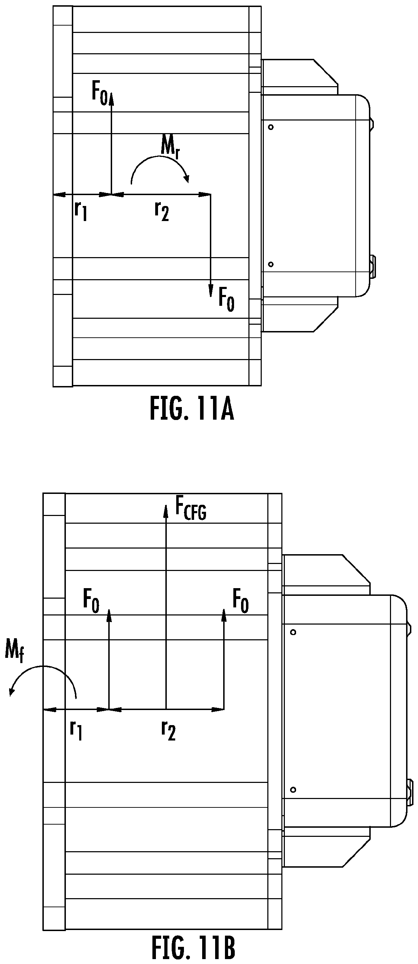

Referring to Figure 11A, when CFGs are arranged in pairs, the imbalanced masses revolve in distinct parallel planes that are separated by a distance (e.g., $r_2$-$r_1$), whereby the opposing force components produce a residual moment ($M_r$). This residual moment varies inversely with the force output:

$$M_r = r_2 \cdot F_0 \sin\left(\frac{\varphi_1 - \varphi_2}{2}\right)$$

As illustrated in Figure 11B, because the imbalanced masses each typically revolve in planes some distance from a mounting bracket, the total force of the CFGs produces moment about the mounting bracket. This force moment varies linearly with the force output:

$$M_f = \left(r_1 + \frac{1}{2}r_2\right) \cdot F_{CFG}$$

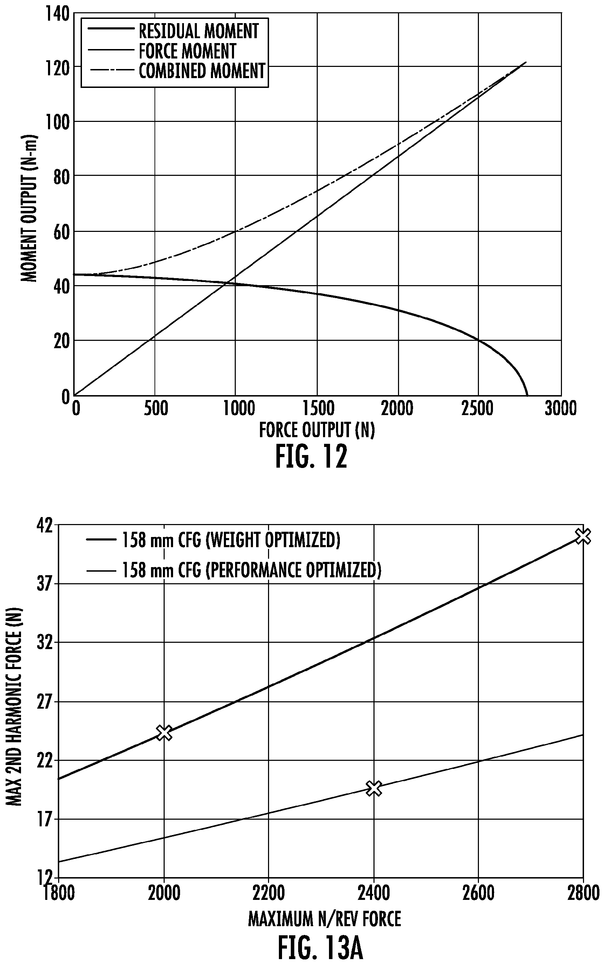

The residual moment and force moment are perpendicular, and the total moment of the CFGs is the vector sum of residual and force moment as shown in Figure 12:

$$M_{CFG} = \sqrt{M_r^2 + M_f^2}$$

Residual moments can further be minimized by reducing the distance (e.g., $r_2$) between the center of mass of the two imbalanced masses. Another approach to reduce the residual moment is to change the inertia (J) of the rotating (movable) imbalance. By increasing the inertia (J), the residual moment is decreased.

In another exemplary implementation, when a CFG is mounted vertically, gravity accelerates and decelerates the imbalanced masses as they revolve:

$$\omega = \left(\frac{mrg}{J\omega_0}\right)\sin(\omega_0 t + \varphi) + \omega_0$$

This fluctuation in speed due to gravity creates a force distortion at the second harmonic, which is inversely proportional to angular speed ($\omega$) and rotor inertia ($J$), proportional to the imbalance authority ($mr$), and varies with the relative phase angle ($\varphi$). The 2nd harmonic distortion can be much more pronounced at low force outputs such that total harmonic distortion (THD) is predominantly due to the 2nd harmonic.

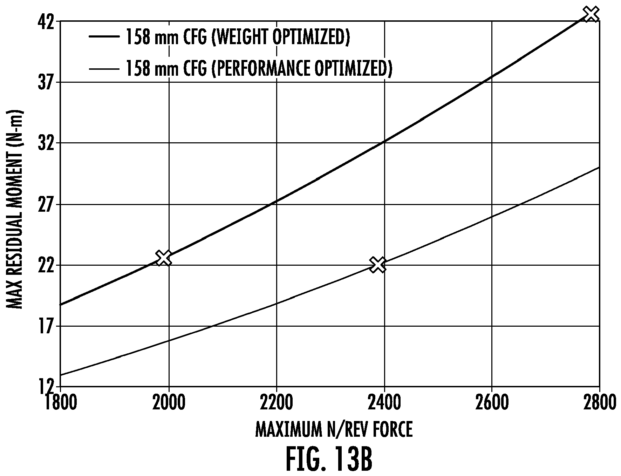

Referring to Figure 13A, the second harmonic force distortion can also be reduced by increasing the inertia of the imbalanced mass, which results in a decrease in the residual moment as well (See, e.g., Figure 13B).

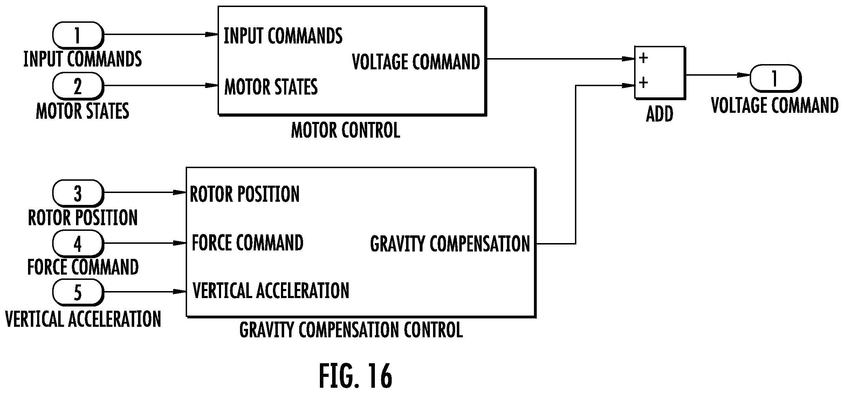

In another embodiment, measurement of the acceleration at the base of the CFG is used in the motor control feedback to reduce the second harmonic distortion. For example, one of the one or more accelerometers **320** can be incorporated onto co-located electronics (e.g., integrated with the controller **200**). As discussed above, this CFG-positioned accelerometer can also be used to control vibration by providing an input to the central controller 300 for determining the vibration to be controlled. Figure 16 shows a block diagram of the accelerometer in the motor control. The gravity compensation term for motor control is calculated from the following general equation:

$$V_{GC} = f(\phi, F_{cmd}, a_z)$$

where

$V_{GC}$ = Gravity compensation for motor control
$\phi$ = Rotor position
$F_{cmd}$ = Force command
$a_z$ = Vertical acceleration

$V_{GC}$ can be implemented as analytical function or table look-up. One exemplary form of the above function for voltage motor control is as follows.

$$V_{GC} = A_{GC} \sin(\phi + P_{GC}) \cdot C_F(F_{cmd}) \cdot C_a(a_z)$$

$A_{GC}$ and $P_{GC}$ are amplitude gain and phase, respectively, to take dynamics of motor circuit into account. $C_F(F_{cmd})$ and $C_a(a_z)$ are variable coefficients to change the gravity compensation amount with respect to force command and vertical acceleration. $C_F(F_{cmd})$ and $C_a(a_z)$ can be implemented as analytical function or table look-up. Exemplary implementation of $C_F(F_{cmd})$ and $C_a(a_z)$ are presented in the below.

$$C_F(F_{cmd}) = -A_F F_{cmd} + B_F$$

$$C_a(a_z) = A_a a_z$$

where $A_F$, $B_F$, and $A_a$ are tuning parameters. Note that the accelerometer can have additional functionality.

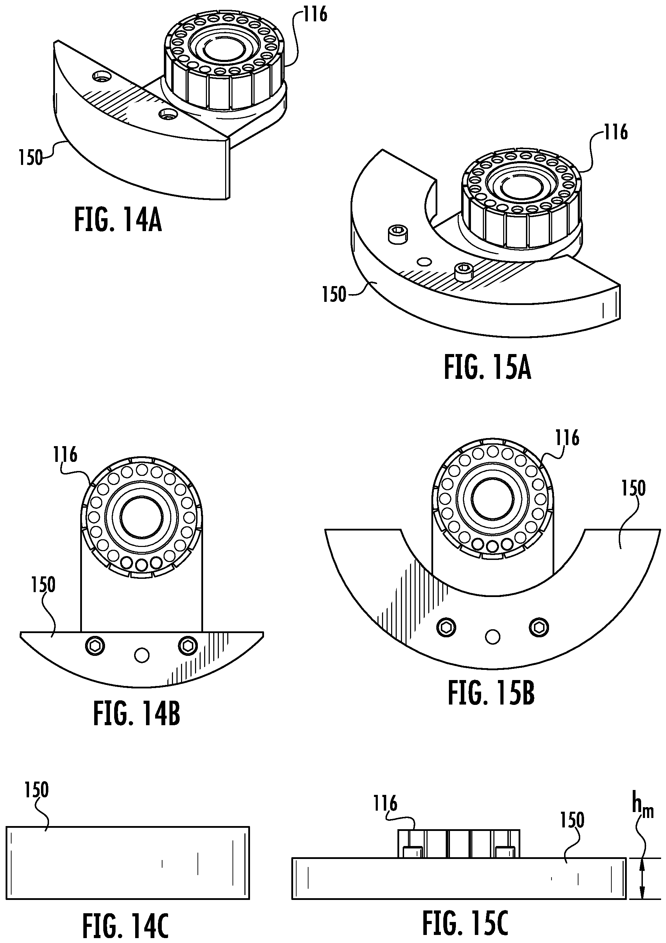

Figures 14A-14C and 15A-15C show various configurations for the rotating mass **150**. Specifically, Figures 14A-14C depict the rotating mass **150** in a "weight optimized" configuration in which a center of mass of the rotating mass **150** is spaced at a greatest radius possible relative to the axis of rotation for a given set of system constraints. In this configuration, a substantially equivalent inertia is produced using a rotating mass **150** having a relatively small size. In contrast, Figures 15A-15C depict the rotating mass 150 in a "moment optimized" or "performance optimized" configuration in which a height h of the rotating mass **150** is reduced (e.g., about 50% of the thickness of the weight optimized mass) such that adjacent CFGs are positioned closer to one another, thereby allowing the distance (e.g., $r_2$) between the center of mass of adjacent imbalanced masses to be minimized as discussed above to help reduce the residual moment. The "moment optimized" mass can have an inertia that is approximately twice that of the "weight optimized" mass even though the CFG with a "moment optimized" mass may only be about 10% heavier than the CFG with a "weight optimized" mass.

The present subject matter can be embodied in other forms without departure from the claimed subjectmatter. The embodiments described therefore are to be considered in all respects as illustrative and not restrictive. Although the present subject matter has been described in terms of certain preferred embodiments, other embodiments that are apparent to those of ordinary skill in the art are also within the scope of the present subject matter.

**Claims**

1.  A circular force generator (100) for use in an active vibration control system, comprising:

    a component housing (114); and
    a center shaft (120), wherein the center shaft (120) is positioned in a fixed relationship with respect to the component housing;
    at least one motor (110) having a rotor (116) and a fixed stator (112), the rotor (116) rotatably coupled to the center shaft (120) by a bearing (130), wherein the fixed stator (112) is configured to cause rotation about the center shaft (120) of an eccentric mass (150) connected to the rotor (116) to produce a rotating force with a rotating force magnitude and a controllable rotating force phase: **characterized in that** it further comprises

a high accuracy servo controller (200) configured to control the rotating force magnitude and a rotating force phase of the rotor (116), the control system comprising a Hall-effect sensor servo control; and

a micro-controller contained in the component housing, the micro-controller being configured to receive high-level digital commands from a central controller (300).

2. The circular force generator (100) of claim 1, wherein the bearing (130) is a ball bearing having a bore diameter of about 15 mm.

3. The circular force generator (100) of claim 1, wherein the bearing (130) comprises a substantially sealed, grease-lubricated bearing.

4. The circular force generator (100) of claim 1, wherein an inertia and a thickness of the eccentric mass (150) are selected to minimize at least one of a residual moment or a second harmonic force distortion of the rotor (116).

5. The circular force generator (100) of claim 1, wherein the Hall-effect sensor servo control comprises a plurality of standard commutation Hall sensors and at least one 1/rev Hall sensor (160b).

6. The circular force generator (100) of claim 1, wherein the micro-controller is configured to be selectively positioned within the component housing at any of a variety of positions with respect to the rotor (116).

7. The circular force generator (100) of claim 1, wherein the micro-controller and the central controller (300) are configured to be powered by a 28 VDC aircraft power supply.

8. The circular force generator (100) of claim 1, wherein the central controller (300) generates the high-level digital commands based on inputs from one or more accelerometers (320).

9. An active vibration control system comprising a plurality of the circular force generator (100) device according to claim 1, wherein the plurality of circular force generators (100) are collectively controllable to minimize force distortion caused by the plurality of circular force generators (100).

10. The active vibration control system of claim 9, wherein a distance (r) between centers of mass of each of the plurality of circular force generators (100) is selected to be a minimum distance.

**Patentansprüche**

1. Ein Kreiskrafterzeuger (100) zur Verwendung in einem aktiven Schwingungssteuerungssystem, beinhaltend:

ein Komponentengehäuse (114); und eine Mittelwelle (120), wobei die Mittelwelle (120) in einer festen Beziehung in Bezug auf das Komponentengehäuse positioniert ist; mindestens einen Motor (110), der einen Rotor (116) und einen feststehenden Stator (112) aufweist, wobei der Rotor (116) durch ein Lager (130) drehbar mit der Mittelwelle (120) gekoppelt ist, wobei der feststehende Stator (112) konfiguriert ist, um die Bewegung einer exzentrischen Masse (150), die mit dem Rotor (116) verbunden ist, um die Mittelwelle (120) zu bewirken, um eine Drehkraft mit einer Drehkraftgröße und einer steuerbaren Drehkraftphase zu produzieren; **dadurch gekennzeichnet, dass** er ferner Folgendes beinhaltet: eine Servosteuervorrichtung (200) hoher Genauigkeit, die konfiguriert ist, um die Drehkraftgröße und eine Drehkraftphase des Rotors (116) zu steuern, wobei das Steuerungssystem eine Hall-Effekt-Sensor-Servosteuerung beinhaltet; und eine Mikrosteuerung, die in dem Komponentengehäuse enthalten ist, wobei die Mikrosteuerung konfiguriert ist, um digitale High-Level-Befehle von einer zentralen Steuervorrichtung (300) zu empfangen.

2. Kreiskrafterzeuger (100) gemäß Anspruch 1, wobei das Lager (130) ein Kugellager mit einem Innendurchmesser von etwa 15 mm ist.

3. Kreiskrafterzeuger (100) gemäß Anspruch 1, wobei das Lager (130) ein im Wesentlichen abgedichtetes, fettgeschmiertes Lager beinhaltet.

4. Kreiskrafterzeuger (100) gemäß Anspruch 1, wobei eine Trägheit und eine Dicke der exzentrischen Masse (150) ausgewählt sind, um mindestens eines von einem Restmoment oder einer Kraftverzerrung der zweiten Harmonischen des Rotors (116) zu minimieren.

5. Kreiskrafterzeuger (100) gemäß Anspruch 1, wobei die Hall-Effekt-Sensor-Servosteuerung eine Vielzahl von Standardkommutierungs-Hall-Sensoren und mindestens einen 1/U-Hall-Sensor (160b) beinhaltet.

6. Kreiskrafterzeuger (100) gemäß Anspruch 1, wobei die Mikrosteuerung konfiguriert ist, um innerhalb des Komponentengehäuses an einer beliebigen von einer Vielfalt von Positionen in Bezug auf den Rotor (116) selektiv positioniert zu sein.

**7.** Kreiskrafterzeuger (100) gemäß Anspruch 1, wobei die Mikrosteuerung und die zentrale Steuervorrichtung (300) konfiguriert sind, um von einer 28-VDC-Luftfahrzeug-Stromversorgung angetrieben zu werden.

**8.** Kreiskrafterzeuger (100) gemäß Anspruch 1, wobei die zentrale Steuervorrichtung (300) die digitalen High-Level-Befehle auf der Basis von Eingaben von einem oder mehreren Beschleunigungsmessern (320) erzeugt.

**9.** Ein aktives Schwingungssteuerungssystem, beinhaltend eine Vielzahl der Kreiskrafterzeuger(100)-Vorrichtungen gemäß Anspruch 1, wobei die Vielzahl von Kreiskrafterzeugern (100) gemeinsam steuerbar sind, um von der Vielzahl von Kreiskrafterzeugern (100) verursachte Kraftverzerrung zu minimieren.

**10.** Aktives Schwingungssteuerungssystem gemäß Anspruch 9, wobei ein Abstand (r) zwischen Massenzentren jedes der Vielzahl von Kreiskrafterzeugern (100) so ausgewählt ist, dass er ein Minimalabstand ist.

**Revendications**

**1.** Un générateur de force circulaire (100) destiné à être utilisé dans un système de contrôle de vibrations actif, comprenant :

un logement de composant (114) ; et
un arbre central (120), dans lequel l'arbre central (120) est positionné dans une relation fixe par rapport au logement de composant ;
au moins un moteur (110) ayant un rotor (116) et un stator fixe (112), le rotor (116) étant couplé de façon à pouvoir tourner à l'arbre central (120) par un roulement (130), dans lequel le stator fixe (112) est configuré pour entraîner la rotation autour de l'arbre central (120) d'une masse excentrique (150) raccordée au rotor (116) afin de produire une force rotative avec une magnitude de force rotative et une phase de force rotative contrôlable ;
**caractérisé en ce qu'**il comprend en outre
un servocontrôleur de haute précision (200) configuré pour contrôler la magnitude de force rotative et une phase de force rotative du rotor (116), le système de contrôle comprenant un servocontrôle à capteur à effet Hall ; et
un microcontrôleur contenu dans le logement de composant, le microcontrôleur étant configuré pour recevoir des commandes numériques de haut niveau d'un contrôleur central (300).

**2.** Le générateur de force circulaire (100) de la revendication 1, dans lequel le roulement (130) est un roulement à billes ayant un diamètre d'alésage d'environ 15 mm.

**3.** Le générateur de force circulaire (100) de la revendication 1, dans lequel le roulement (130) comprend un roulement lubrifié à la graisse, substantiellement scellé.

**4.** Le générateur de force circulaire (100) de la revendication 1, dans lequel une inertie et une épaisseur de la masse excentrique (150) sont sélectionnées afin de minimiser au moins un élément parmi un moment résiduel ou une distorsion de force de second harmonique du rotor (116).

**5.** Le générateur de force circulaire (100) de la revendication 1, dans lequel le servocontrôle à capteur à effet Hall comprend une pluralité de capteurs Hall à commutation standard et au moins un capteur Hall 1/rev (160b).

**6.** Le générateur de force circulaire (100) de la revendication 1, dans lequel le microcontrôleur est configuré pour être sélectivement positionné à l'intérieur du logement de composant dans n'importe quelle position parmi diverses positions par rapport au rotor (116).

**7.** Le générateur de force circulaire (100) de la revendication 1, dans lequel le microcontrôleur et le contrôleur central (300) sont configurés pour être alimentés par une alimentation en puissance d'aéronef 28 VDC.

**8.** Le générateur de force circulaire (100) de la revendication 1, dans lequel le contrôleur central (300) génère les commandes numériques de haut niveau sur la base d'entrées d'un ou de plusieurs accéléromètres (320).

**9.** Un système de contrôle de vibrations actif comprenant une pluralité de dispositifs de générateurs de force circulaire (100) selon la revendication 1, dans lequel la pluralité de générateurs de force circulaire (100) sont collectivement contrôlables afin de minimiser la distorsion de force provoquée par la pluralité de générateurs de force circulaire (100).

**10.** Le système de contrôle de vibrations actif de la revendication 9, dans lequel une distance (r) entre des centres de masse de chaque générateur parmi la pluralité de générateurs de force circulaire (100) est sélectionnée pour être une distance minimum.

FIG. 1A

FIG. 1B

**FIG. 2**

**FIG. 3**

FIG. 4

FIG. 5A

FIG. 5B

FIG. 6A

FIG. 6B

FIG. 6C

**FIG. 6D**

**FIG. 7**

FIG. 8

FIG. 9

FIG. 10

FIG. 11A

FIG. 11B

FIG. 12

FIG. 13A

FIG. 13B

FIG. 14A

FIG. 15A

FIG. 14B

FIG. 15B

FIG. 14C

FIG. 15C

FIG. 16

EP 2 931 602 B1

**EP 2 931 602 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5005439 A1
- WO 2009126608 A2